(19) Europäisches Patentamt
European Patent Office
Office européen des brevets

(11) EP 0 677 555 B1

(12) # EUROPÄISCHE PATENTSCHRIFT

(45) Veröffentlichungstag und Bekanntmachung des Hinweises auf die Patenterteilung:
**04.06.1997 Patentblatt 1997/23**

(51) Int Cl.6: **C08L 55/02**, C08L 51/04, C08L 25/12, C08L 69/00, C08L 23/02

(21) Anmeldenummer: **95104950.1**

(22) Anmeldetag: **03.04.1995**

(54) **Kompatibilisierte Mischungen aus ABS-Kunststoffen, Polyolefinen und gegebenenfalls aromatischen Polycarbonaten**

Compatibilised blends from ABS-polymers, polyolefins and optionally aromatic polycarbonates

Compatibilisation de mélanges de ABS-copolymères, de polyoléphines et éventuellement de polycarbonate aromatique

(84) Benannte Vertragsstaaten:
**BE DE ES FR GB IT NL**

(30) Priorität: **15.04.1994 DE 4413006**
**23.06.1994 DE 4421900**

(43) Veröffentlichungstag der Anmeldung:
**18.10.1995 Patentblatt 1995/42**

(73) Patentinhaber: **BAYER AG**
**51368 Leverkusen (DE)**

(72) Erfinder:
- **Tischer, Werner, Dipl.-Ing.**
**D-41542 Dormagen (DE)**
- **Köhler, Burkhard, Dr.**
**D-47829 Krefeld (DE)**

(56) Entgegenhaltungen:
**EP-A- 0 446 443** **EP-A- 0 487 067**
**DE-A- 4 211 415** **NL-A- 9 200 616**

- **DATABASE WPI Week 8625 Derwent Publications Ltd., London, GB; AN 86-160447 & JP-A-61 095 062 (MITSUBISHI GAS CHEM KK) , 13.Mai 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 677 555 B1

**Beschreibung**

Die Erfindung betrifft Mischungen aus ABS-Kunststoffen und Polyolefinen, die gegebenenfalls zusätzlich aromatische Polycarbonate enthalten und die durch Zusatz einer synergistischen Mischung aus Ethylenvinylacetat-Copolymerisat und einem Terpolymerisat aus Ethylen, Alkylacrylat und einer Glycidylgruppen enthaltenden Vinylverbindung verträglich gemacht worden sind.

Insbesondere ist Gegenstand der Erfindung eine Masse aus

A) 40 bis 97 Gew.-%, bevorzugt 60 bis 90 Gew.-% ABS-Kunststoffe

B) 30 bis 3 Gew.-%, bevorzugt 20 bis 5 Gew.-% Polyolefin

C) 30 bis 0 Gew.-%, bevorzugt 20 bis 5 Gew.-% aromatisches Polycarbonat, die, bezogen auf A) + B) + C)

D) 1 bis 8 Gew.-% eines Verträglichmachers enthält, welcher ein synergistisches Gemisch aus Ethylenvinylacetat-Copolymerisat und einem Terpolymerisat von 55 bis 95 Gew.-% Ethylen, 4 bis 44 Gew.-% eines Alkylacrylats, 1 bis 15 Gew.-% einer eine Epoxygruppe tragenden Vinylverbindung darstellt, und

E) 0 bis 6 Gew.-%, bevorzugt 1 bis 3 Gew.-% eines säurefunktionellen Nitrilkautschuk enthält.

Die Bestandteile dieser Mischung sind prinzipiell bekannt. Es ist bis heute nicht gelungen, aus z.B. bei der Aufarbeitung von Kunststoffverbundteilen anfallenden Mischungen - sie enthalten häufig ABS und Polyolefin - Kunststoffformmassen mit guten Eigenschaften, z.B. Kerbschlagzähigkeit und hinreichender Verträglichkeit der Bestandteile herzustellen. Dies gelingt nur durch Zumischen der erfindungsgemäßen Kompatibilisierungsmischung aus Ethylen/Vinylacetat-Copolymerisat und Terpolymerisat aus Ethylen, Alkylacrylat und einer Epoxyguppen tragenden Vinylverbindung.

Mit ABS Kunststoff wird im vorliegenden Zusammenhang ein Material bezeichnet, das aus

A1) 0 bis 90 Gew.-Teilen, bevorzugt 10 bis 80 Gew.-Teilen und besonders bevorzugt 20 bis 75 Gew.-Teilen eines oder mehrerer thermoplastischer Homo-, Co- oder Terpolymerisate, aufgebaut aus polymerisierten Vinylmonomeren, ausgewählt aus Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat und Mischungen daraus und

A2) 10 bis 100 Gew.-Teilen, bevorzugt 90 bis 20 Gew.-Teilen und besonders bevorzugt 25 bis 80 Gew.-Teilen eines oder mehrerer Pfropfprodukte aus

$A2_1$) 5 bis 90 Gew.-Teilen, vorzugsweise 30 bis 80 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf

$A2_2$) 95 bis 10 Gew.-Teile, vorzugsweise 70 bis 20 Gew.-Teile eines Kautschuks mit einer Glastemperatur ≤ 10°C.

Die Produkte A1) und A2) sind bekannt und z.B. in der Deutschen Offenlegungsschrift 3 808 844 näher beschrieben.

Bevorzugte Pfropfprodukte im Sinne der Erfindung sind Pfropfprodukte von Styrol und Acrylnitril auf Polybutadien, wobei im allgemeinen 50 bis 90 Gew.-% Styrol und 10 bis 50 Gew.-% Acrylnitril in der Mischung der Pfropfmonomeren vorhanden sind. Die Pfropfprodukte enthalten im allgemeinen 10 bis 30 Gew.-% Polybutadien in Form kleiner Teilchen. Im allgemeinen ist das Polybutadien vernetzt. Man kann diese Pfropfprodukte durch Polymerisation von Styrol und Acrylnitril in Gegenwart eines Polybutadienlatex erhalten. Im allgemeinen ist das Pfropfprodukt bereits ein Gemisch aus freiem Styrol/Acrylnitril-Copolymerisat und Kautschukteilchen, auf die Styrol und Acrylnitril pfropfpolymerisiert ist. Den Kautschukgehalt dieses Produktes kann man durch Zugeben von separat hergestelltem Styrolacrylnitril-Copolymerisat auf den gewünschten Wert einstellen. Diese Mischung ist hier als Pfropfpolymerisat bezeichnet.

ABS-Kunststoffe sind bekannt. Zusammenfassende Darstellungen finden sich in Ullmann's Enzyklopädie, Bd. 19, S. 277 ff. und in Roempp's Chemielexikon, 8. Auflage 1987, Bd. 2, S. 25 ff.

Polyolefine B) sind Polyethylen, Polypropylen, Poly-1-buten und Polymethylpenten, die noch geringe Mengen nicht konjugierter Diene einpolymerisiert enthalten können. Auch diese Polymerisate sind bekannt und in Roempp's Chemielexikon, 8. Auflage 1987, Bd. 5, S. 3307 und in der dort zitierten Literatur beschrieben.

Thermoplastische, aromatische Polycarbonate C.) im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden aromatische Polyestercarbonate genannt. Sie sollen im vorliegenden Zusammenhang von dem Begriff thermoplastische, aromatische Polycarbonate mit umfaßt werden.

Aromatische Polycarbonate können in bekannter Weise aus Diphenolen, Kohlensäurederivaten, gegebenenfalls Kettenabbrechern und gegebenenfalls Verzweigern hergestellt werden, wobei zur Herstellung von Polyestercarbonaten ein Teil der Kohlensäurederivate durch aromatische Dicarbonsäuren oder Derivate davon ersetzt werden, und zwar in dem Maße in dem aromatische Carbonatstruktureinheiten durch aromatische Dicarbonsäureesterstruktureinheiten ersetzt werden sollen.

Einzelheiten der Herstellung von Polycarbonaten sind in vielen Veröffentlichungen seit etwa 40 Jahren niedergelegt. Beispielhaft sei hier nur verwiesen auf: "Chemistry and Physics of Polycarbonates", Polymer Reviews, Volume 9, Interscience Publishers, 1964; "Synthesis of Poly(ester Carbonate) Copolymers" in Journal of Polymer Science, Polymer Chemistry Edition, Vol. 18, 75-90 (1980); "Polycarbonates" in Encyclopedia of Polymer Science and Engineering, Volume 11, Second Edition, 1988, Seiten 648-718 und "Polycarbonate" in Becker/Braun, Kunststoff-Handbuch, Band 3/1, Polycarbonate, Polyacetale, Polyester, Celluloseester, Carl Hanser Verlag 1992, Seiten 117-299.

Die thermoplastischen Polycarbonate einschließlich der thermoplastischen, aromatischen Polyestercarbonate haben mittlere Molekulargewichte $\overline{M}w$ (ermittelt durch Messung der relativen Viskosität bei 25°C in $CH_2Cl_2$ und einer Konzentration von 0,5 g pro 100 ml $CH_2Cl_2$) von 12 000 bis 120 000, vorzugsweise von 18 000 bis 80 000 und insbesondere von 22 000 bis 60 000.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan,1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3 ,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis2,2-Bis-(3-methyl-4-hydroxyphenyl)-propan, 2,2-Bis-(3 ,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in "Chemistry and Physics of Polycarbonates, Interscience Publishers, New York 1964" sowie in den japanischen Offenlegungsschriften 62039/1986, 62040/1986 und 105550/1086 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (I)

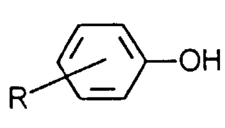

(I)

worin

R ein verzweigter oder unverzweigter $C_8$- und/oder $C_9$-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4''-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die bonsäuredimethylester.

Der Einsatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu stabilisierenden Polycarbonate, einschließlich der Polyestercarbonate sind das bekannte flächenverfahren und das bekannte Schmelzumesterungsverfahren.

Im ersten Fall dient als Kohlensäurederivat vorzugsweise Phosgen, im letzteren Fall vorzugsweise Diphenylcarbonat.

Die einen Bestandteil des Verträglichmachers D.) darstellenden Ethylenvinylacetat-Copolymerisate sind ebenfalls aus Roempp's Chemielexikon, 8. Auflage, Bd. 2, S. 1217 und der dort zitierten Literatur bekannt. Für die vorliegende Erfindung besonders geeignete Copolymerisate dieser Art sind: Copolymere mit einem Vinylacetatgehalt von 20-80 Gew.-%, vorzugsweise von 35-55 Gew.-%.

Der zweite Bestandteil des Verträglichmachers D.) ist ein Terpolymerisat aus Ethylen, einem Alkylacrylat und einer Epoxigruppen tragenden Vinylverbindung.

Im allgemeinen enthält das Terpolymerisat 55 bis 95 Gew.-% Ethyleneinheiten, 4 bis 44 Gew.-% Alkylacrylateinheiten und 1 bis 15 Gew.-% der Einheiten des Epoxigruppen tragenden Monomeren. Als Alkylacrylate kommen bevorzugt $C_1$-$C_6$-Alkylacrylate, insbesondere N-Butyl-Acrylat und 2-Ethylhexyl-Acrylat in Betracht. Bevorzugtes Monomer mit Epoxigruppen ist Glycidylmethacrylat. Diese Copolymerisate können hergestellt werden durch radikalische Copolymerisation der Monomere in Masse oder Lösung.

Erfindungswesentlich ist der kombinierte Einsatz des Ethylen/Vinylacetat-Copolymerisats und des Terpolymerisats als Kompatibilisator. Ethylen/Vinylacetat-Copolymerisat alleine hat nur eine geringe zähigkeitserhöhende Wirkung, das Terpolymerisat alleine überhaupt keinen Effekt. Kombiniert ergeben beide eine deutliche Erhöhung der Kerbschlagzähigkeit.

Säurefunktionelle Nitrilkautschuke E sind Copolymerisate aus 10 - 50 Gew.-% Acrylnitril, 0,5 - 10 Gew.-% Acryl oder Methylacrylsäure und 89,5 - 40 Gew.-% Butadien. Diese Copolymerisate sind ebenfalls bekannt.

Die Mischungen können durch Zusammenschmelzen der Bestandteile in kontinuierlich oder diskontinuierlich arbeitenden Vorrichtungen, z.B. Knetern oder Extrudern, bei Temperaturen von 130 bis 280°C hergestellt werden. Die Formmassen zeichnen sich durch hohe Schlagzähigkeit aus und sind reinen ABS-Polycarbonatpolyolefin-Mischungen überlegen. Sie können durch Spritzguß oder durch andere Verfahren zu Formkörpern verarbeitet werden. Es ist möglich und in vielen Fällen sogar bevorzugt, als Komponenten für diese Formmassen recycliertes Material oder Produktionsabfälle zu verwenden.

Insbesondere für ABS-Kunststoffe, die geringere Mengen Polyolefine enthalten, stellt die Kombination von Ethylen/Vinylacetat-Copolymerisat, Terpolymerisat von Ethylen, Alkylacrylat und Epoxygruppen enthaltende Vinylverbindung

mit dem säurefunktionellen Nitrilkautschuk auch ein Mattierungsmittel dar, das für ein mattes Aussehen der Oberfläche (geringer Glanzgrad) sorgt, ohne die Kerbschlagzähigkeit der Massen zu beeinträchtigen.

**Beispiel 1**

Die erfindungsgemäßen Mischungen und die Vergleichsversuche wurden auf Kerbschlagzähigkeit nach DIN 53 543 geprüft. Die Prüfstäbe wurden bei 240°C gespritzt.

Allen Versuchen liegt ein Gemisch aus 70 Gew.-% ABS-Kunststoffe, 15 Gew.-% aromatisches Polycarbonat und 15 Gew.-% Polyethylen niedriger Dichte zugrunde. Der ABS-Kunststoff selbst ist zusammengesetzt aus

40 Gew.-% eines Pfropfpolymerisats von 50 Gew.-Teilen Styrol und Acrylnitril im Gewichtsverhältnis 72 zu 28 auf 50 Gew.-Teile teilchenförmigen vernetzten Polybutadienkautschuk (mittlerer Teilchendurchmesser $d_{50}$ = 0,4 μm) hergestellt durch Emulsionspolymerisation und

60 Gew.-% eines Styrol/Acrylnitril-Copolymerisats mit einem Styrol:Acrylnitril-Gewichtsverhältnis von 72 zu 28 und einer Grenzviskosität $\eta$ = 0,55 dl/g (in Dimethylformamid bei 20°C).

Das aromatische Polycarbonat ist lineares Bisphenol-A-Polycarbonat mit einer relativen Lösungsviskosität von 2,4. Das Polyethylen ist kommerzielles Polyethylen niedriger Dichte (LDPE).

Zu 100 Gew.-Teilen dieser Mischung wurden zugefügt:

1. 4 Gew.-Teile eines Copolymerisats aus Ethylen und Vinylacetat mit 45 Gew.-% Vinylacetat; Kerbschlagzähigkeit 11,5 kJ/$m^2$
2. 4 Gew.-Teile eines Copolymerisats aus 67 Gew.-% Ethylen, 28 Gew.-% Butylacrylat und 5 Gew.-% Glycidylmethacrylat; Kerbschlagzähigkeit 8 kJ/$m^2$
3. 4 Gew.-Teile eines Styrol/Butadien-Blockcopolymerisats; Kerbschlagzähigkeit 9,2 kJ/$m^2$
4. 2 Gew.-Teile des Ethylen/Vinylacetat-Copolymerisats aus Versuch 1 und 2 Gew.-Teile des Terpolymerisats aus Versuch 2; Kerbschlagzähigkeit 14,7 kJ/$m^2$

**Beispiel 2**

Als ABS-Kunststoffe wurde eine Mischung aus 58,8 % eines Styrol/Acrylnitril-Copolymerisats mit einem Acrylnitrilgehalt von 28 % und einem MVR, gemessen nach DIN 53-7-35, von 5-7 $cm^3$/10 min (240°C/10 kg) und 41,2 % eines ABS-Pfropfprodukts von 60 Gew.-% eines Gemisches aus 23,8 % Acrylnitril und einem 46,2 % Styrol von 46,2 % auf 40 Gew.-% eines Nitrilkautschuks eingesetzt. Als säurefunktioneller Nitrilkautschuk ein Copolymerisat von 65,5 Gew.-% Butadien, 33,5 Gew.-% Acrylnitril und 1 Gew.-% Acrylsäure.

Die übrigen Bestandteile sind wie in Beispiel 1.

Die Messung der Glanzgrade wurde mit dem Labor-Reflektometer multi gloss 2 der Fa. Labotron mit einer Meßgeometrie von 60°C vorgenommen. Die Messung der Kerbschlagzähigkeit, $a_k$, erfolgte nach DIN 53-4-53.

**Vergleichsbeispiel 2.1** (ABS-Kunststoffe allein)

Der ABS-Kunststoff allein hat einen Glanzgrad von 90 % und eine Kerbschlagzähigkeit von 20 kJ/$m^2$.

**Vergleichsbeispiel 2.2** (ABS-Kunststoffe mit üblichem Mattierungsmittel)

Man mischt 100 Gew.-Teile des ABS-Kunststoffes mit 0,5 Gew.-Teilen hydrophobierter, pyrogener Kieselsäure. Man erhält einen Glanzgrad von 35 % und eine Kerbschlagzähigkeit von 16 kJ/$m^2$.

**Beispiel 2.3**

Man mischt 100 Gew.-% des ABS-Kunststoffes mit 3 Gew.-Teilen Polyethylen, einem Gewichtsteil Terpolymerisat (Beispiel 1.N.2), einem Gewichtsteil säurefunktioneller Nitrilkautschuk und einem Gewichtsteil-Ethylen/Vinylacetat-Copolymerisat. Man erhält einen Glanzgrad von 25 % und eine Kerbschlagzähigkeit von 23 kJ/$m^2$.

Die erfindungsgemäßen Mattierungsmittel beeinflussen die Kerbschlagzähigkeit im Gegensatz zu üblichen Mattierungsmitteln positiv und sind in Bezug auf Mattigkeit dem Stand der Technik überlegen.

## Patentansprüche

**1.** Masse aus

A) 40 bis 97 Gew.-% ABS-Kunststoffe

B) 30 bis 3 Gew.-%,Polyolefin

C) 30 bis 0 Gew.-%, aromatisches Polycarbonat, die, bezogen auf A) + B) + C)

D) 1 bis 8 Gew.-% eines Verträglichmachers, welcher ein synergistisches Gemisch aus Ethylenvinylacetat-Copolymerisat und einem Terpolymerisat von Ethylen, Alkylacrylat, und einer eine Epoxygruppe tragenden Vinylverbindung darstellt und

E) 0-6 Gew.-% eines säurefunktionellen Nitrilkautschuks enthält.

## Claims

**1.** A composition comprising

A) 40 to 97 wt.% of ABS plastics,

B) 30 to 3 wt.% of polyolefin, and

C) 30 to 0 wt.% of aromatic polycarbonate, said composition containing, based on A) + B) + C),

D) 1 to 8 wt.% of a compatibilizer which is a synergistic mixture of ethylene/vinyl acetate copolymer and a terpolymer of ethylene, alkyl acrylate and a vinyl compound carrying an epoxy group, and

E) 0-6 wt.% of an acid-functional nitrile rubber.

## Revendications

**1.** Masse consistant en

A) 40 à 97 % en poids de résines synthétiques ABS,
B) 30 à 3 % en poids d'une polyoléfine
C) 30 à 0 % en poids d'un polycarbonate aromatique par rapport à A) + B) + C),
D) 1 à 8 % en poids d'un agent compatibilisant qui consiste en un mélange synergétique d'un copolymère éthylène-acétate de vinyle et d'un copolymère ternaire de l'éthylène, d'un acrylate d'alkyle et d'un dérivé vinylique portant un groupe époxy et
E) 0 à 6 % en poids d'un caoutchouc nitrile à fonctions acides.